(19) Europäisches Patentamt
European Patent Office
Office européen des brevets

(11) Veröffentlichungsnummer : **0 033 899**
**B1**

(12) # EUROPÄISCHE PATENTSCHRIFT

(45) Veröffentlichungstag der Patentschrift : **30.03.83**

(51) Int. Cl.[3] : **C 25 D 13/06**, C 09 D 3/72, C 09 D 5/40, C 08 F 2/46, C 08 G 18/83

(21) Anmeldenummer : **81100586.7**

(22) Anmeldetag : **28.01.81**

(54) **Verfahren zur Herstellung von Überzügen.**

(30) Priorität : **11.02.80 DE 3005034**

(43) Veröffentlichungstag der Anmeldung : **19.08.81 Patentblatt 81/33**

(45) Bekanntmachung des Hinweises auf die Patenterteilung : **30.03.83 Patentblatt 83/13**

(84) Benannte Vertragsstaaten : **BE DE FR GB NL**

(56) Entgegenhaltungen : **AT B 299 415**

(73) Patentinhaber : **BASF Aktiengesellschaft**
**Carl-Bosch-Strasse 38**
**D-6700 Ludwigshafen (DE)**

(72) Erfinder : **Lehner, August**
**Wachenheimer Strasse 4**
**D-6701 Rödersheim-Gronau 1 (DE)**
Erfinder : **Gimpel, Juergen, Dr.**
**Osloer Weg 44**
**D-6700 Ludwigshafen (DE)**
Erfinder : **Buethe, Ingolf, Dr.**
**Seckenheimer Strasse 11-13**
**D-6800 Mannheim (DE)**
Erfinder : **Hartmann, Heinrich, Dr.**
**Weinheimer Strasse 46**
**D-6703 Limburgerhof (DE)**
Erfinder : **Schenck, Hans-Uwe, Dr.**
**Erlenweg 6**
**D-6706 Wachenheim (DE)**

**EP 0 033 899 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

Verfahren zur Herstellung von Überzügen

Die vorliegende Erfindung betrifft ein Verfahren zur Herstellung von Überzügen auf elektrisch leitfähigen Gegenständen durch elektrophoretisches Abscheiden anionischer Polyurethane aus wäßriger Dispersion auf den als Anode geschalteten elektrisch leitfähigen Gegenstand und Bestrahlung mit UV- oder Elektronenstrahlen, wobei als anionische Polyurethane Additionsprodukte von Mercaptocarbonsäuresalzen an Polyurethane verwendet werden.

Die Elektrotauchlackierung ist ein umweltfreundliches Verfahren, bei dem aus wäßrigem Milieu Lacke auf elektrisch leitende Träger abgeschieden werden. Danach werden die Lackfilme im allgemeinen bei erhöhter Temperatur vernetzt. Bei der Strahlungshärtung benötigt man Bindemittel, die aus olefinischen Gruppen enthaltenden Präpolymeren zusammen mit poly- und monofunktionellen Monomeren bestehen. Es gibt dabei Umweltschutzprobleme bei der Verarbeitung dieser Mischungen aufgrund des Dampfdrucks der eingesetzten Monomeren. Durch die Kombination beider Verfahren gelingt es, sowohl die Umweltschutzprobleme der konventionellen strahlungshärtbaren Lacke zu beseitigen, wie auch Elektrotauch-Lacke herzustellen, die nicht thermisch vernetzt werden müssen. Anwendung kann dieses Verfahren dort finden, wo es gilt, Metalloberflächen gleichmäßig zu beschichten. Beim konventionellen Auftragen von strahlungshärtbaren Lacken auf Metalle erreicht man nicht die Gleichmäßigkeit in der Schichtdicke, die bei der Elektrotauchlackierung möglich ist. Auch die Haftung des z. B. durch Spritzen, Tauchen, Bestreichen aufgebrachten Lackfilms auf metallischem Untergrund ist schlecht. Elektrophoretisch abgeschiedene Lackfilme haften bedeutend besser.

In der DE-OS 22 07 031 wird ein Lackaufbau beschrieben, der aus einer Elektrotauch-Grundierung und einem darauf applizierten strahlungshärtbaren Lack besteht. Ein derartiger Lackaufbau wird auch in der DE-AS 20 15 287 und der JA-PS 73 04 446 beschrieben. Bei diesen Mehrschichtlacken muß, um die Haftung zwischen beiden Schichten zu verbessern, einige Zeit bei erhöhter Temperatur eingebrannt werden.

Lacke, die sowohl die für die Elektrotauchabscheidung erforderlichen polaren Gruppen wie auch die für die Strahlungshärtung erforderlichen Doppelbindungen enthalten, werden in der DE-AS 23 01 075 beschrieben. Die verwendeten Bindemittel bestehen aus ungesättigten sauren Harzen und wasserunlöslichen polyfunktionellen UV-Vernetzern. Als saure Harze werden hier Umsetzungsprodukte aus Epoxidharz und ungesättigten Fettsäuren, die maleinisiert werden, fettsäuremodifizierte ungesättigte saure Alkydharze und maleinisierte Öle, welche mit Styrol oder (Meth)acrylester modifiziert sind, genannt. Harze, die äthylenisch ungesättigte Doppelbindungen und Carboxylgruppen für die elektrophoretische Ascheidung enthalten, sind auch der US-PS 4 040 925 zu entnehmen.

Aufgabe der vorliegenden Erfindung ist es, ein Verfahren zur Herstellung von Überzügen auf elektrisch leitfähigen Gegenständen durch anodische Elektrotauchlackierung und Bestrahlung mit UV- oder Elektronenstrahlen aufzuzeigen, das gegenüber den bekannten vergleichbaren Verfahren sowohl verarbeitungstechnische Vorteile als auch Überzüge mit verbesserten Eigenschaften, insbesondere hinsichtlich Haftung, Korrosionsschutz, Verlauf und Elastizität aufweist.

Überraschenderweise wurde gefunden, daß sich auch wäßrige, Acrylatdoppelbindungen enthaltende Polyurethandispersionen als Elektrotauchlacke abscheiden lassen.

Gegenstand der vorliegenden Erfindung ist ein Verfahren zur Herstellung von Überzügen auf elektrisch leitfähigen Gegenständen durch elektrophoretisches Abscheiden anionischer Polyurethane aus wäßriger Dispersion auf den als Anode geschalteten elektrisch leitfähigen Gegenstand und Bestrahlung mit UV- oder Elektronenstrahlen, das dadurch gekennzeichnet ist, daß als anionisches Polyurethan ein Additionsprodukt eines Salzes einer Mercaptocarbonsäure an ein Polyurethan verwendet wird, wobei das Polyurethan ein Umsetzungsprodukt von Polyisocyanaten mit einem Gemisch aus

a) Acrylesterdiolen mit Molekulargewichten zwischen 146 und 3 000,

b) anderen von a) verschiedenen organischen Polyhydroxylverbindungen mit Molekulargewichten zwischen 400 und 5 000 sowie gegebenenfalls,

c) von a) verschiedenen Diolen, Diaminen, Aminoalkoholen oder Triolen mit Molekulargewichten zwischen 62 und 400 oder Wasser,

im NCO/OH-Verhältnis von 0,4 : 1 bis 1,3 : 1 ist und das Additionsprodukt des Salzes der Mercaptocarbonsäure an das Polyurethan 3 bis 15 Gewichtsprozent Carboxylatgruppen enthält.

Die erfindungsgemäß zu verwendenden anionischen Polyurethane können entweder für sich allein oder in Kombination mit wasserunlöslichen, Doppelbindungen aufweisenden Vernetzern elektrophoretisch abgeschieden werden. Soll der abgeschiedene Lack anschließend durch UV-Strahlung vernetzt werden, enthält das Elektrotauchbad zweckmäßigerweise 0,5 bis 10 %, vorzugsweise 1 bis 4 %, bezogen auf das Polyurethan an wasserunlöslichem UV-Initiator.

Das Elektrotauchbad enthält 5 bis 20 Gew.% Bindemittel, das aus

50 bis 100 Gew.% Polyurethan und
0 bis 50 Gew.% wasserunlöslichem polyfunktionellem Vernetzer besteht.

Die erfindungsgemäß zu verwendenden anionischen Polyurethane werden durch Addition von Mercaptocarbonsäuresalzen an einen Teil der C-C-Doppelbindungen der Acrylatgruppen der Polyurethane über Thioätherbrücken unter Einbau von Carboxylatgruppen erhalten, wobei das zum Aufbau des Polyurethans zu wählende NCO/OH-Verhältnis vorzugsweise zwischen 0,5 : 1 und 1,2 : 1, insbesondere zwischen 0,6 : 1 und 0,85 : 1 betragen soll. Bei der Herstellung des Polyurethans kann auch mit einem Isocyanatüberschuß gearbeitet werden, wobei das NCO/OH-Verhältnis zwischen 1,15 : 1 und 1,3 : 1 liegen kann, und der Isocyanatüberschuß durch Reaktion mit Wasser, Alkohol, Monoamin oder Hydroxyacrylate umgesetzt wird.

Die erfindungsgemäß zu verwendenden Polyurethane weisen im allgemeinen K-Werte (nach Fikentscher, Cellulosechemie *13,* 58 (1932)) zwischen 10 und 30, vorzugsweise zwischen 15 und 25 auf.

Zu den Aufbaukomponenten des erfindungsgemäß zu verwendenden anionischen Polyurethan ist im einzelnen folgendes auszuführen.

Als Polyisocyanate eignen sich die üblichen, aus der Polyurethanchemie bekannten Verbindungen, insbesondere Diisocyanate. Es können sowohl aromatische als auch aliphatische oder heterocyclische Diisocyanate verwendet werden, beispielsweise 4,4-Diphenylmethandiisocyanat, Dicyclohexylmethandiisocyanat, 1,5-Naphthylendiisocyanat, 2,4- und 2,6-Toluylendiisocyanat, Hexamethylendiisocyanat, Isophorondiisocyanat und Trimethylhexamethylendiisocyanat und Dicyclohexylmethandiisocyanat.

In einigen speziellen Fällen können auch teilweise verkappte Polyisocyanate verwendet werden, welche die Bildung zusätzlich vernetzender Polyurethane ermöglichen, z. B. dimeres Toluylendiisocyanat, oder mit beispielsweise Phenol, tert.-Butanol, Phthalimid oder Caprolactam partiell umgesetzte Polyisocyanate.

a) Als Acrylesterdiole mit Molekulargewichten zwischen 146 und 3 000 eignen sich Reaktionsprodukte von Epoxidverbindungen mit polymerisierbaren olefinisch ungesättigten Carbonsäuren, insbesondere Acryl- und Methacrylsäure, wobei jeweils etwa auf jede Epoxidgruppe eine Carboxylgruppe kommt, sowie Reaktionsprodukte von Dicarbonsäuren mit polymerisierbaren olefinisch ungesättigten Glycidylverbindungen (Glycidyl(meth-) acrylat), wie sie z. B. in der DE-OS 21 64 386 beschrieben sind.

Als ungesättigtes Acrylesterdiol eignen sich auch Umsetzungsprodukte aus OH-Gruppen-tragenden Monoepoxyden wie Glycidol mit (Meth)-Acrylsäure. Geeignete polymerisierbare Diole (Polyole) können z. B. aus Epoxiden mit zwei endständigen Epoxidgruppen gemäß der allgemeinen Formel

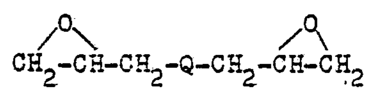

erhalten werden, in der Q ein zweibindiges Radikal bedeutet, wie z. B. —O—, $—O—(\overset{R_1}{\overset{|}{C}}H—CH_2—O)_n—$ mit n = 1-10, wobei $R_1$ für Wasserstoff oder Methyl steht, d. h. also ein von Äthylenglykol oder Propylenglykol abgeleitetes Radikal, ein $—O—(CH_2)_m—O—$Rest mit m = 1 bis 10, vorzugsweise 1 bis 7 oder wobei dieses Radikal von Polyäthylenglykol oder Polypropylenglykol herleitbar ist, oder Q für den Rest der allgemeinen Formel

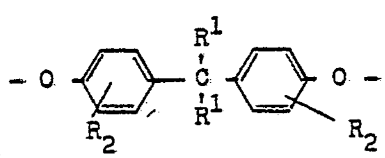

steht, wobei dieses Radikal von 4.4-Dihydroxydiphenylmethan, Bisphenol A oder kernsubstituierten Derivaten dieser Verbindungen hergeleitet werden kann. Die Umsetzungsprodukte der Epoxidverbindungen mit Acryl- und/oder Methacrylsäure sollten bei der späteren Umsetzung mit Diisocyanaten weitgehend bi- bis trifunktionell in Bezug auf OH-Gruppen sein. Bei einer OH-Funktionalität > 3 besteht sonst die Gefahr der Vernetzung.

Die Umsetzung zwischen den Epoxidverbindungen und den polymerisierbaren olefinisch ungesättigten Säuremonomeren ist eine ringöffnende Veresterung zwischen den Estergruppen, der Diepoxidverbindungen und den Carboxylgruppen der polymerisierbaren (Meth)acrylsäure, die etwa analog der DE-OS 21 64 386 in bekannter Weise ausgeführt werden kann.

Die vorgenannten Epoxidverbindungen und deren Umsetzungsprodukte können allein oder im Gemisch verwendet werden.

Als Komponente a) eignen sich bevorzugt Umsetzungsprodukte aus Bisphenol A-Diglycidyläther (z. B.. ®Epikote 828 der Fa. Shell) oder Glycidol mit Acryl- oder Methacrylsäure.

Die ungesättigten Polyurethane werden durch Umsetzen von Diisocyanaten mit den so erhaltenen (Meth-)acrylesterdiolen mit einem Molekulargewicht von 146 bis 3 000 a), Dihydroxylverbindungen mit einem Molekulargewicht von 400 bis 5 000 b) und ggf. Kettenverlängerungsmitteln c) in Lösung hergestellt.

b) Als von a) verschiedene organische Polyhydroxylverbindungen mit Molekulargewichten zwischen 400 und 5 000, vorzugsweise zwischen 500 und 4 000, eignen sich im wesentlichen lineare Polyester, Polycarbonate, Polylactone (z. B. Polycaprolacton) und Polyäther. Außer endständigen Hydroxylgruppen können derartige Verbindungen auch Carboxyl-, Amino- oder Mercaptogruppen enthalten.

Als Polyäther seien z. B. die Polymerisationsprodukte des Äthylenoxyds, Propylenoxyds, Tetrahydrofurans, Butylenoxyds sowie ihre Misch- oder Pfropfpolymerisationsprodukte sowie die durch Kondensation von mehrwertigen Alkoholen oder Mischungen derselben gewonnenen Kondensate oder die durch Alkoxylierung von mehrwertigen Alkoholen gewonnenen Produkte genannt.

Geeignete Polyester b) sind z. B. Veresterungsprodukte von Adipinsäure mit $C_2$-$C_{10}$-Alkandiolen oder Oxaalkandiolen. Geeignete Polycarbonate sind z. B. Hexandiolpolycarbonate.

c) Als gegebenenfalls mitzuverwendende, von a) verschiedene Diole, Diamine, Aminoalkohole oder Triole mit Molekulargewichten zwischen 62 und 400 eignen sich entsprechende Kettenverlängerungsmittel, wie die üblichen gesättigten oder ungesättigten Glykole, wie Äthylenglykol oder Kondensate des Äthylenglykols, Butandiol, Propandiol-1.2, Propandiol-1.3, Neopentylglykol, Dioxäthoxy-hydrochinon, Butendiol, Dioxäthyldian, aliphatische, cycloaliphatische, aromatische oder heterocyclische primäre oder sekundäre Amine, wie N-Methyläthanolamin, N-Butyläthanolamin, N-Oleyläthanolamin, N-Cyclohexylisopropanolamin, N,N-Dioxäthyl-p-toluidin, N,N-Dioxypropylnaphthylamin, polyäthoxyliertes N-Butyldiäthanolamin, die aliphatischen, cycloaliphathischen oder aromatischen Diamine, wie Äthylendiamin, Hexamethylendiamin, 2,4-Cyclohexylendiamin, Benzidin, Diaminodiphenylmethan, die Isomeren des Phenylendiamins oder Hydrazin, Aminoalkohole, wie Äthanolamin, Propanolamin oder Butanolamin. Gegebenenfalls kann auch Wasser als Kettenverlängerungsmittel verwendet oder mitverwendet werden.

Mehrfunktionelle Alkohole wie Trimethylolpropan, Glycerin usw. sollten in weniger als 15 Äquivalent % verwendet werden.

Die Komponenten a), b) und c) werden im allgemeinen in Mengen von 100 : (10 bis 400) : (0 bis 30), vorzugsweise 100 : (20 bis 300) : (1 bis 20) eingesetzt.

Beispielsweise können auf 1 Mol Polyol b) 0 bis 5 Mol bifunktionelle, 0 bis 3 Mol höherfunktionelle Kettenverlängerer und 1 bis 30, vorzugsweise 5 bis 25 Mole Acrylesterdiole a) kommen.

Bei der Wahl des Lösungsmittels ist zu beachten, daß bei der Herstellung der Polyurethanmasse kein Lösungsmittel verwendet wird, das unter den Reaktionsbedingungen mit Isocyanatgruppen reagierende funktionelle Gruppen besitzt. Im erfindungsgemäßen Verfahren kann jedes beliebige Lösungsmittel eingesetzt werden, das mit der Polyurethanmasse und den Reaktionspartnern nicht in Reaktion tritt. Bevorzugte Lösungsmittel sind gegebenenfalls halogenierte Kohlenwasserstoffe, Ketone, Äther, Ester oder Nitrile, wie z. B. Aceton, Methyläthylketon, Acetonitril, Äthylacetat, Methylenchlorid, Chloroform, Tetrachlorkohlenstoff, Dimethylformamid, Dimethylsulfoxyd, Tetrahydrofuran oder Dioxan. Selbstverständlich können auch Mischungen derartiger Lösungsmittel verwendet werden.

Die Herstellung der Polyurethan-Lösungen kann auf üblichen Wegen erfolgen, z. B. :

In Masse (im Kessel oder auf Bandanlagen). Bei einer Synthese auf der Bandanlage werden die Ausgangsprodukte mittels einer Zahnradpumpe flüssig über einen Intensiv-Mischer auf ein langes Band gegeben, welches eine beheizte und gekühlte Zone besitzt. Nachdem das noch nicht ausreagierte Polyurethan das Band verlassen hat, wird es bis zur Vollendung der Polyaddition in der Wärme gelagert und dann gelöst.

Einstufenreaktion in Lösung :

Alle Reaktionsteilnehmer werden 20 bis 90 %ig, vorwiegend 30 bis 70 %ig, in Lösungsmittel in das Reaktionsgefäß eingewogen und auf 20 bis 130 °C, vorwiegend auf 30 bis 90 °C erwärmt. Das Polymere ist fertig, wenn der gewünschte NCO-Wert erreicht ist (bei Überschuß an Isocyanat) oder wenn alle NCO-Gruppen abreagiert sind (bei Überschuß an H-aktiven Verbindungen) ;

Zweistufenreaktion in Lösung :

Vorreaktion von Polyol und Diisocyanat wird in einem Teil des Lösungsmittels bei vorwiegend 30 bis 90 °C durchgeführt, dann wird mit einem Diol und Triol die Kette verlängert. Die weitere Fahrweise entspricht der Einstufenreaktion.

Die Herstellung kann mit Polyurethankatalysatoren, wie sie aus der Polyurethanchemie bekannt sind, beschleunigt werden. Gebräuchliche Katalysatoren sind z. B. metallorganische Verbindungen, wie Dibutylzinndilaurat, tert.-Amine oder Triazine.

Als Mercaptocarbonsäuren eignen sich alle Carbonsäuren, die eine Mercaptogruppe tragen. Besonders geeignet sind Mercaptosäuren, bei denen die Mercaptogruppe in α- oder β-Stellung zur Säuregruppe steht. Die Mercaptocarbonsäuren können aliphatisch, cycloaliphatisch, araliphatisch oder aromatisch sein, beispielsweise Mercaptoessigsäure, Mercaptopropionsäure, Mercaptobuttersäure, Mercaptolinolsäure, Mercaptotrimethylessigsäure Mercaptocyclohexansäure, Mercaptophenylessigsäure, Mercaptobenzoesäure, Mercaptochlorbenzoesäure. Ebenfalls geeignet sind Umsetzungsprodukte von Mercaptoäthanol mit Poly- oder Dicarbonsäureanhydriden z. B. mit Bernsteinsäureanhydrid, Maleinsäureanhydrid, Phthalsäureanhydrid oder Trimellithsäureanhydrid, wenn dadurch die SH-Gruppe frei bleibt. Besonders bevorzugt ist Mercaptoessigsäure.

Zur Überführung der Mercaptocarbonsäuren in ihre Salzform geeignete Verbindungen sind z. B. : organische Basen wie monofunktionelle primäre, sekundäre und tert.-Amine wie beispielsweise Methylamin, Diäthylamin, Trimethylamin, Triäthylamin, Äthylamin, Tributylamin, Pyridin, Methyläthylamin,

Diäthylmethylamin, Anilin, Toluidin, alkoxylierte Amine wie Äthanolamin, Diäthanolamin, Triäthanolamin, Diisopropanolamin, Methylendiäthanolamin, Oleyldiäthanolamin sowie polyfunktionelle Amine, bei denen die einzelnen Aminogruppen gegebenenfalls unterschiedliche Basizität aufweisen können wie z. B. N,N-Dimethyläthylendiamin, α-Aminopyridin, N,N-Dimethylhydrazin, wobei Amine mit einem Siedepunkt unter 120 °C und davon noch die tert. Amine wie z. B. Trimethylamin oder Triäthylamin bevorzugt sind sowie anorganische Basen, wie Ammoniak. Bevorzugte Verbindungen sind Diäthanolamin, Diisopropanolamin, Triäthylamin und Triäthanolamin.

Die Polyurethanlösung wird mit solchen Mengen Mercaptocarbonsäuresalz umgesetzt, daß der Carboxylatgruppengehalt des Additionsproduktes 3 bis 15, vorzugsweise 4 bis 8 Gew.% beträgt.

Für die Addition der SH-Gruppen können die Mercaptocarbonsäuresalze in fester Form oder in Lösung verwendet werden. Die Verwendung der Lösung ist bevorzugt. Die Lösungsmittel sollten die Addition der SH-Gruppe nicht verhindern. In speziellen Fällen kann es jedoch günstig sein, wenn zumindest ein Teil des Lösungsmittels mit den gegebenenfalls noch im Polyurethan vorhandenen NCO-Gruppen unter Kettenverlängerung oder Kettenabbruch reagieren können. Beispielsweise seien genannt halogenierte Kohlenwasserstoffe, Ketone, Alkohole, Ester, Wasser, Äther, und Diolmono(meth-)acrylate. Zweckmäßigerweise verwendet man die reaktiven Lösungsmittel (reaktiven Verdünner) meist nur in untergeordneten Mengen. Als reaktive Verdünner eignen sich die bei der Polyurethanherstellung beschriebenen Kettenverlängerungsmittel.

Als nicht reaktive Lösungsmittel besonders geeignet sind Aceton, Methyläthylketon, Tetrahydrofuran, Diäthyläther und Toluol.

Der Einbau der ionischen Gruppen durch Anlagerung von Mercaptosäuresalzen an Doppelbindungen von Acrylaten kann schon bei niedrigen Temperaturen durchgeführt werden. Die Reaktion verläuft sehr schnell. Bei 35 °C ist die Anlagerung z. B. in weniger als 10 Minuten beendet.

Die Reaktivität der SH-Gruppe in Mercaptosäuresalz ist gegenüber der Acryldoppelbindung wesentlich höher als gegenüber NCO-Gruppen.

Für die Umsetzung wird der Acrylat-gruppenhaltige Polyurethanlösung bei Temperaturen von 0 °C bis 120 °C vorwiegend zwischen 0 und 60 °C die Mercaptosäuresalzlösung zugegeben. Die Zulaufzeit kann beliebig gewählt werden. Da die Reaktion jedoch sehr schnell beendet ist, sind Zulaufzeiten von kleiner als 10 Minuten ja sogar von 1 Minute möglich.

Die erfindungsgemäß zu verwendenden anionischen Polyurethane enthalten auf 1 000 g Polyurethanharz 0,3 bis 3, vorzugsweise 0,5 bis 2 Mole Acrylesterdoppelbindungen.

Zur Modifizierung der Eigenschaften (z. B. Erhöhung der Thermostabilität und Härte) können vor der Wasserzugabe noch mehrfunktionelle Polyisocyanate zugesetzt werden. Geeignete mehrfunktionelle Polyisocyanate sind z. B. in den Patenten DE-PS 10 90 196, DE-PS 11 01 394, DE-PS 12 22 067 beschrieben.

Nach Wasserzugabe wird das Lösungsmittel abdestilliert, wobei eine gleichmäßige Dispersion entsteht.

Als mindestens zweifach olefinisch ungesättigte organische Verbindungen mit Molekulargewichten zwischen 130 und 2 000 sind z. B. geeignet Divinylbenzol, Äthylenglykoldiacrylat, (meth)acrylierte Polyester, (meth)acrylierte Urethane und Polyurethane, methacrylierte Polyether und Umsetzungsprodukte von Epoxiden mit (Meth)acrylsäure. Besonders bevorzugt sind Umsetzungsprodukte aus Glycidäthern von Phenolen des Bisphenol A-Typs mit vorzugsweise einem Molekulargewicht von ca. 370 mit (Meth)acrylsäure im Molverhältnis 1 : 2. Diese « Vernetzer » können in Mengen von bis zu 50 Gewichtsprozent des anionischen Polyurethans mitverwendet werden.

Es hat sich gezeigt, daß die Eigenschaften der Überzüge den jeweiligen Anforderungen entsprechend in breiten Bereichen optimiert werden können, wenn die Polyurethandispersionen mit mono-, di- oder polyfunktionellen ungesättigten Vernetzern kombiniert werden. Dabei hat es sich als vorteilhaft erwiesen, wenn dem z. B. in Aceton gelösten Polyurethanionomeren der reaktive Vernetzer zugegeben, dann das Wasser eingebracht und das Lösungsmittel abdestilliert wird.

Erfindungsgemäß werden die anionischen Polyurethane bzw. deren Gemische mit mindestens zweifach olefinisch ungesättigten organischen Verbindungen mit Molekulargewichten zwischen 130 und 2 000 (Vernetzer) elektrophoretisch abgeschieden, der abgeschiedene Überzug anschließend zweckmäßigerweise mit VE-Wasser abgespült, durch Preßluft trockengeblasen und z. B. bei 50 bis 120 °C getrocknet und dann mittels UV-Strahlen oder Elektronenstrahlen ausgehärtet.

Als Elektrotauchbad werden wäßrige Dispersionen verwendet, die durch Zusatz von vollentsalztem Wasser auf Feststoffgehalte von 5 bis 20, vorzugsweise 8 bis 15 Gewichtsprozent eingestellt werden. Der pH-Wert der Elektrotauchbäder liegt im allgemeinen zwischen 7,2 und 9,0, vorzugsweise 7,2 bis 8,2, die Abscheidungsspannung zwischen 50 und 300 V, die Badtemperatur zwischen etwa 18 und 30 °C und die Abscheidezeit bei 15 Sekunden bis 3 Minuten (vgl. auch W. Machu, Elektrotauchlackierung, S. 163 ff.).

Für die UV-Härtung ist die Mitverwendung eines oder mehrerer üblicher Photoinitiatoren nötig, bevorzugt sind Benzophenon und Derivate, Benzoin, Benzoinäther, Benzil, Benzilketale, Thioxanthone usw. ; besonders bevorzugt sind Benzildimethylketal und Methylthioxanthon.

Verwendet man weniger als 0,5 Gew.% UV-Initiator, erhält man keine ausreichende Durchhärtung des abgeschiedenen Films nach der UV-Bestrahlung. Bei der Verwendung von mehr als 10 Gew.% verschlechtern sich die mechanischen Eigenschaften des abgeschiedenen Lackfilms aufgrund der Weichmacherwirkung des UV-Initiators sehr. Bei der Verwendung von 1 bis 5 % erhält man die besten mechanischen Eigenschaften der Lacke. Geeignete Strahlungsquellen für die UV-Härtung sind beispielsweise Niederdruck-Quecksilber-Lampen, Hochdruck-Quecksilber-Lampen usw., z. B. beschrieben in « UV-Curing, Science and Technology », by S. Peter Papas, technology marketing corporation, Stamford, USA (1978).

Bei Härtung mittels Elektronenstrahlen benötigt man keine UV-Initiatoren. Als Elektronenstrahlenquellen können beispielsweise der Van de Graaff-Beschleuniger und Linearbeschleuniger (z. B. beschrieben in DE-OS 20 49 715) verwendet werden. Im allgemeinen kommen beschleunigte Elektronen mit 150 bis 350 keV sowie eine Dosis von 10 bis 100 Joule/g in Frage. Die Elektronenstrahlhärtung erfolgt im allgemeinen unter einem Schutzgas, wie Stickstoff.

Außer dem Bindemittel können den erfindungsgemäß zu verwendenden Überzugsmitteln die üblichen Pigmente wie Titandioxid, Talkum oder Ruß oder dessen Mischungen in Mengen von bis zu 60 Teilen, vorzugsweise von bis zu 30 Teilen, sowie bis zu 45 Teilen organischer Substanzen ohne C—C—Doppelbindungen, jeweils bezogen auf 100 Gewichtsteile Bindemittel zugesetzt werden. Außerdem können Verlaufsmittel bis zu 10 Teilen, Wachse zur Erhöhung der Kratzfestigkeit bis zu 10 Teilen bezogen auf 100 Teile Bindemittel enthalten sein.

Mit den erfindungsgemäßen Elektrotauchlacken lassen sich vor allem Gegenstände aus Eisen, Stahl und Aluminium beschichten. Die vernetzten Überzüge weisen eine hohe Härte auf, sind sehr elastisch und chemikalienbeständig, besonders gegen Aceton, Benzin und aromatische Kohlenwasserstoffe. Sie zeichnen sich weiterhin durch gute Haftfestigkeit auf der metallischen Unterlage aus, besitzen eine gute Abriebfestigkeit und guten Korrosionsschutz.

Die in den Beispielen angegebenen Teile und Prozente sind, soweit nicht anders angegeben, Gewichtsteile und Gewichtsprozente.

## Herstellung der Polyurethandispersionen

Dispersion (1):

In 873 Teilen Tetrahydrofuran werden 100 Teile Polytetrahydrofuran (MG 2000), 4,47 Teile Trimethylolpropan, 544 Teile des acrylierten Epoxidharzes (1) (= Epikote 828-diacrylat) und 225 Teile 4,4-Diphenylmethandiisocyanat gelöst.

Nach Zugabe von 0,2 Teilen Dibutylzinndilaurat und 0,2 Teilen Dibutylzinnoktoat wird solange bei 60 °C gerührt, bis der NCO-Gehalt 0 % beträgt.

Nun wird innerhalb von 5 Minuten eine Mischung aus 92 Teilen 80 %iger Merkaptoessigsäure, 80,8 Teilen Triäthylamin und 42 Teile Aceton zugetropft. Nach 1 Stunde bei 60 °C wird soviel Wasser zugegeben, bis eine Dispersion entsteht.

Das Lösungsmittel wird im Vakuum abgezogen. Der Feststoffgehalt der Dispersion beträgt 32.6 %.

Dispersion (2):

Die Herstellung erfolgt wie Dispersion (1), jedoch mit 200 Teilen Polytetrahydrofuran und 237,5 Teilen 4,4'-Diphenylmethandiisocyanat. Der Feststoffgehalt der Dispersion beträgt 27,1 %.

Dispersion (3):

In 689 Teilen Tetrahydrofuran werden 200 Teile Polytetrahydrofuran (MG 2000), 8,94 Teile Trimethylolpropan und 200 Teile 4,4'-Diphenylmethandiisocyanat gelöst. Nach Zugabe von 0,1 Teilen Dibutylzinndilaurat und 0,2 Teilen Dibutylzinnoktoat wird 15 Minuten bei 60 °C gerührt.

Dann werden 808 Teile einer 67 %igen, acetonischen Lösung von Epikote 828-diacrylat zugegeben. Es wird dann solange bei 60 °C gerührt, bis der NCO-Gehalt 0 % beträgt. Nun wird innerhalb von 5 Minuten eine Mischung aus 92 Teilen 80 %iger Merkaptoessigsäure, 80,8 Teilen Triäthylamin und 42 Teilen Aceton zugegeben.

Anschließend läßt man nach einer Stunde soviel Wasser zulaufen, bis eine Dispersion entsteht.

Das Lösungsmittel wird durch Vakuumdestillation abgezogen. Der Feststoffgehalt der Dispersion beträgt 40 %.

Herstellung der Vernetzer (= mindestens zweifach olefinisch ungesättigte organische Verbindung mit Molekulargewicht zwischen 130 und 2 000).

1. Acryliertes Epoxidharz (1)

Der Diglycidäther des Bisphenols A mit einem mittleren Molekulargewicht von 370 und einem Epoxidwert von 0,51 bis 0,54 wurde gemäß dem bekannten Stand der Technik (s. z. B. US-PS 2 890 202, 3 373 075, 3 420 514, 3 535 403 und DE-OS 16 18 729) mit Acrylsäure im Molverhältnis 1 : 2 umgesetzt. Das erhaltene Umsetzungsprodukt wird in Aceton gelöst, so daß eine 50 %ige Lösung entsteht.

2. Acrylierter Polyester

Ein hydroxylgruppenhaltiger Polyester aus einem Äquivalent Adipinsäure, 0,53 Äquivalent Phthalsäureanhydrid, 1,81 Äquivalent Äthylenglykol und 0,78 Äquivalent Trimethylolpropan werden gemäß dem

bekannten Stand der Technik mit einem molaren Überschuß an Acrylsäure umgesetzt. Nach beendeter Umsetzung wird bei 10 bis 15 torr und erhöhter Temperatur das Lösungsmittel und die nicht umgesetzte Acrylsäure entfernt.

3. Acryliertes Epoxidharz (2)

Der Triglycidyläther des Pentaerythrits wird gemäß dem bekannten Stand der Technik (z. B. DE-OS 23 17 523) mit Acrylsäure im Molverhältnis 1 : 3 umgesetzt. Die Reaktion ist bei einer Säurezahl kleiner als drei beendet.

## Elektrotauchlacke

### Beispiel 1

184 Teile der Polyurethandispersion (1), 80 Teile einer 50 %igen Lösung des acrylierten Epoxidharzes (1) in Aceton und 4 Teile Benzildimethylketal wurden durch intensives Rühren miteinander vermischt. Es wird so lange vollentsalztes Wasser hinzugegeben, bis der Feststoffgehalt der Dispersion 10 % beträgt. Die Dispersion wird 12 Stunden bei 40 °C gealtert, um das organische Lösungsmittel zu entfernen und dann auf Zimmertemperatur abgekühlt. Der pH-Wert der Dispersion beträgt 8,1 und die spezifische Leitfähigkeit 874 µS/cm.

Bei einer Abscheidespannung von 200 V werden während einer Abscheidezeit von 2 Minuten zinkphosphatierte Stahlbleche anodisch beschichtet. Diese werden mit VE-Wasser gespült, 8 Minuten auf 100 °C erwärmt und nach dem Abkühlen mit einer Bandgeschwindigkeit von 6 m/min an einen Quecksilber-Hochdruckstrahler (Leistungsaufnahme 80 W/cm Bogenlänge) in einem Abstand von 10 cm vorbeigeführt. Die Lackeigenschaften sind in Tabelle 1 angegeben.

### Beispiel 2

258 Teile der Polyurethandispersion (2), 60 Teile des acrylierten Epoxidharzes (1) (50 %ig) und 4 Teile Benzildimethylketal werden wie bei Beispiel 1 beschrieben zu einer 10 %igen wäßrigen Dispersion verarbeitet, deren pH-Wert 7,6 und deren Leitfähigkeit 920 µS/cm beträgt. Bei 250 V werden zinkphosphatierte Bleche anodisch beschichtet. Diese werden nach dem Abspülen mit vollentsalztem Wasser 1 min auf 100 °C erwärmt und der lack wird dann mit UV-Strahlen wie in Beispiel 1 beschrieben gehärtet. die Lackeigenschaften gibt Tabelle 1 wieder.

### Beispiel 3

Der 10 %ige Elektrotauchlack enthält 221 Teile der Polyurethandispersion (2), 80 Teile des acrylierten Epoxidharzes (1) (50 %ig) und 4 Teile des UV-Initiators. Der pH-Wert der Dispersion beträgt 7,8, die Leitfähigkeit 780 µS/cm. Die Bleche werden wie in Beispiel 2 beschrieben beschichtet und gehärtet.

### Beispiel 4

Der 10 %ige Elektrotauchlack enthält 184,5 Teile der Polyurethandispersion (2), 100 Teile des acrylierten Epoxidharzes (1) (50 %ig) unf 4 Teile des UV-Initiators. Der pH-Wert der Dispersion beträgt 7,2, die Leitfähigkeit 686 µS/cm. Die Bleche werden wie in Beispiel 2 beschrieben beschichtet, die Abscheidespannung beträgt jedoch 200 V. Die Härtung erfolgt wie in Beispiel 2 mittels UV-Strahlen.

### Beispiel 5

Der 10 %ige Elektrotauchlack enthält 369 Teile der Polyurethandispersion (2) und 4 Teile des UV-Initiators von Beispiel 1. Der pH-Wert des Bades beträgt 7,5 und die Leitfähigkeit 1 560 µS/cm. Bei einer Abscheidungsspannung von 150 V werden Bleche anodisch beschichtet, anschließend 5 min auf 100 °C erwärmt und dann wie in Beispiel 1 beschrieben gehärtet.

### Beispiel 6

Der 10 %ige Elektrotauchlack enthält 175 Teile der Polyurethandispersion (3), 60 Teile des acrylierten Epoxidharzes (1) (50 %ig) und 4 Teile des UV-Initiators aus Beispiel 1. Sein pH-Wert beträgt 7,5 und die Leitfähigkeit 1 217 µS/cm. Die Abscheidespannung beträgt 120 V. Die Bleche werden 2 Minuten auf 100 °C erwärmt und die Lacke wie in Beispiel 1 beschrieben gehärtet.

### Beispiel 7

Der 10 %ige Elektrotauchlack enthält 184 Teile der Polyurethandispersion (1), 40 Teile des acrylierten Polyesters (2) und 3 Teile Benzildimethylketal. Sein pH-Wert beträgt 7,5 und die Leitfähigkeit 1 123 µS/cm. Die Abscheidespannung beträgt 150 V. Die Lacke werden wie in Beispiel 2 beschrieben gehärtet.

Beispiel 8

Der 10 %ige Elektrotauchlack enthält 240 Teile der Polyurethandispersion (2), 35 Teile des acrylierten Epoxidharzes (3) und 2 Teile Benzildimethylketal. Sein pH-Wert beträgt 7,7 und die Leitfähigkeit 998 µS/cm. Die Abscheidespannung beträgt 120 V. Die Lacke werden wie in Beispiel 2 beschrieben gehärtet.

Beispiel 9

Es wird der Elektrotauchlack von Beispiel 7 verwendet, jedoch ohne UV-Initiator. Die beschichteten Bleche werden 1 min auf 100 °C erwärmt und dann mit einer Bandgeschwindigkeit von 15 m/min an einem Elektronenstrahl mit einer Energie von 160 kV und einer Dosis von 7,1 Mrad vorbeigeführt. Die Lackeigenschaften gibt Tabelle 2 wieder.

Beispiel 10

Es wird der Elektrotauchlack von Beispiel 8 verwendet, jedoch ohne UV-Initiator. Die beschichteten Bleche werden 2 min auf 100 °C erwärmt. Dann werden die Lacke wie in Beispiel 9 beschrieben gehärtet.

Beispiel 11

Es wird der Elektrotauchlack von Beispiel 1 ohne UV-Initiator verwendet. die beschichteten Bleche werden 5 min auf 100 °C erwärmt und die Lacke dann wie beschrieben mit Elektronenstrahlen gehärtet.

Beispiel 12

231 Teile der Polyurethandispersion (2), 124,4 Teile des acrylierten Epoxidharzes (1) (50 %ig) werden durch starkes Rühren vermischt, es wird vollentsalztes Wasser hinzu gegeben und 25 Teile Titandioxid vom Rutiltyp, das durch eine Naßmahlung dispergiert wird. Der Elektrotauchlack hat einen Feststoffgehalt von 15 %, einen pH-Wert von 8,3 und eine Leitfähigkeit von 750 µS/cm. Mit 150 V werden zinkphosphatierte Bleche beschichtet. Die Lacke werden dann wie beschrieben mit Elektronenstrahlen gehärtet.

Beispiel 13

160 Teile der Polyurethandispersion (2) und 58 Teile des acrylierten Epoxidharzes (1) werden durch starkes Rühren vermischt. Es wird vollentsalztes Wasser zugegeben und 28 Teile Titandioxid vom Rutiltyp, welches durch Naßmahlung dispergiert wird. Der Elektrotauchlack hat einen Feststoffgehalt von 10 %, einen pH-Wert von 8,4 und eine Leitfähigkeit von 630 µS/cm. Mit 90 V werden zinkphosphatierte Bleche beschichtet. Die Lacke werden dann wie beschrieben mit Elektronenstrahlen gehärtet.

Beispiel 14

170 Teile der Polyurethandispersion (2) und 62 g des acrylierten Epoxidharzes (1) (50 %ig) werden durch starkes Rühren vermischt. Es werden vollentsalztes Wasser, 21 Teile Titandioxid vom Rutiltyp und 2 Teile Ruß zugegeben. Die Pigmente werden durch eine Naßmahlung dispergiert. Der Elektrotauchlack hat einen Feststoffgehalt von 10 %, einen pH-Wert von 8,1 und eine Leitfähigkeit von 811 µS/cm. Mit 50 V werden zinkphosphatierte Bleche beschichtet und dann wie beschrieben mit Elektronenstrahlen gehärtet.

Tabelle 1

Lackeigenschaften der UV-gehärteten Elektrotauchlacke

| Beispiel Nr. | 1 | 2 | 3 | 4 | 5 | 6 | 7 | 8 |
|---|---|---|---|---|---|---|---|---|
| Schichtdicke [µm] | 23 | 24 | 29 | 39 | 12 | 25 | 28 | 29 |
| Pendelhärte [sec] | 179 | 178 | 186 | 167 | 111 | 161 | 110 | 61 |
| Erichsen-Tiefung [mm] | 9 | >10 | 7,2 | 6,0 | >10 | 9,2 | >10 | 8 |
| Glanz (60°) [%] | 99 | 100 | 100 | 100 | 100 | 100 | 94 | 25 |
| Korrosionsschutz in Unterrostung nach 240 Stunden in [mm] | 4 | 3 | 4 | 4 | 96h:10 | 18 | 10 | 96h:5 |
| Acetonbeständigkeit | 10 | 10 | 10 | 10 | 10 | 10 | 10 | 10 |

Tabelle 2
Lackeigenschaften der mit Elektronenstrahlen gehärteten Filme

| Beispiel Nr. | 9 | 10 | 11 | 12 | 13 | 14 |
|---|---|---|---|---|---|---|
| Schichtdicke [µm] | 30 | 26 | 20 | 55 | 20 | 28 |
| Pendelhärte [sec] | 109 | 104 | 221 | 106 | 147 | 129 |
| Erichsen-Tiefung [mm] | 9,8 | 8,5 | 7,8 | 7,0 | 8,0 | 5,3 |
| Glanz (60°) [%] | 92 | 45 | 100 | 85 | 77 | 23 |
| Korrosionsschutz in Unterrostung nach 240 Stunden in [mm] | 10 | 120h:9 | 5 | 8 | 12 | 120h:10 |
| Acetonbeständigkeit | 10 | 10 | 10 | 10 | 10 | 10 |

**Ansprüche**

1. Verfahren zur Herstellung von Überzügen auf elektrisch leitfähigen Gegenständen durch elektrophoretisches Abscheiden anionischer Polyurethane aus wäßriger Dispersion auf den als Anode geschalteten elektrisch leitfähigen Gegenstand und Bestrahlung mit UV- oder Elektronenstrahlen, dadurch gekennzeichnet, daß als anionisches Polyurethan ein Additionsprodukt eines Salzes einer Mercaptocarbonsäure an ein Polyurethan verwendet wird, wobei das Polyurethan ein Umsetzungsprodukt von Polyisocyanaten mit einem Gemisch aus

a) Acrylesterdiolen mit Molekulargewichten zwischen 146 und 3 000,

b) anderen von a) verschiedenen organischen Polyhydroxylverbindungen mit Molekulargewichten zwischen 400 und 5 000 sowie gegebenenfalls,

c) von a) verschiedenen Diolen, Diaminen, Aminoalkoholen oder Triolen mit Molekulargewichten zwischen 62 und 400 oder Wasser,

im NCO/OH-Verhältnis von 0,4 : 1 bis 1,3 : 1 ist und das Additionsprodukt des Salzes der Mercaptocarbonsäure an das Polyurethan 3 bis 15 Gewichtsprozent Carboxylatgruppen enthält.

2. Verfahren nach Anspruch 1, dadurch gekennzeichnet, daß bis zu 50 Gew.% des anionischen Polyurethans durch mindestens zweifach olefinisch ungesättigte organische Verbindungen mit Molekulargewichten zwischen 130 und 2 000 ersetzt sind.

3. Verfahren nach Anspruch 1 oder 2, dadurch gekennzeichnet, daß die wäßrige Dispersion 5 bis 20 Gewichtsprozent des anionischen Polyurethans enthält.

4. Verfahren nach einem der vorhergehenden Ansprüche, dadurch gekennzeichnet, daß das NCO/OH-Verhältnis des zu verwendenden Polyurethans zwischen 0,5 : 1 und 1,2 : 1 liegt.

5. Verfahren nach einem der vorhergehenden Ansprüche, dadurch gekennzeichnet, daß das zu verwendende anionische Polyurethan 0,3 bis 3 Mole Acrylester-C-C-Doppelbindungen in 1 000 g enthält.

6. Verfahren nach einem der Ansprüche 2 bis 5, dadurch gekennzeichnet, daß als mindestens zweifach olefinisch ungesättigte organische Verbindung mit einem Molekulargewicht zwischen 130 und 2 000 das Umsetzungsprodukt des Diglycidäthers von Bisphenol A mit Acrylsäure im Molverhältnis 1 : 2 verwendet wird.

7. Verfahren nach einem der vorhergehenden Ansprüche, dadurch gekennzeichnet, daß das anionische Polyurethan einen wasserunlöslichen Photoinitiator für UV-Strahlen in einer Menge von 1 bis 4 Gewichtsprozent, bezogen auf anionisches Polyurethan enthält.

**Claims**

1. A process for the production of coatings on electrically conductive articles by electrophoretic deposition of anionic polyurethanes from an aqueous dispersion onto the electrically conductive article made the anode, and irradiation with ultraviolet or electron rays, wherein there is used as anionic polyurethane an adduct of a salt of a mercaptocarboxylic acid with a polyurethane, the polyurethane being a reaction product of a polyisocyanate and a mixture of

a) at least one acrylic ester diol having a molecular weight between 146 and 3 000,

b) at least one organic polyhydroxyl compound different from a) having a molecular weight between 400 and 5 000, with or without

c) at least one diol different from a), or at least one diamine, aminoalcohol or triol, each having a molecular weight between 62 and 400, or water,

the NCO/OH ratio being from 0.4 : 1 to 1.3 : 1, and the adduct of the salt of the mercaptocarboxylic acid with the polyurethane contains 3 to 15 % by weight of carboxylate groups.

2. A process as claimed in claim 1, wherein up to 50 % by weight of the anionic polyurethane is replaced by at least diolefinically unsaturated organic compounds having a molecular weight between

130 and 2 000.

3. A process as claimed in claim 1 or 2, wherein the aqueous dispersion contains from 5 to 20 % by weight of the anionic polyurethane.

4. A process as claimed in any of the preceding claims, wherein the NCO/OH ratio of the polyurethane to be used is from 0.5 : 1 to 1.2 : 1.

5. A process as claimed in any of the preceding claims, wherein the anionic polyurethane to be used contains, per 1 000 g, from 0.3 to 3 moles of acrylic ester carbon-carbon double bonds.

6. A process as claimed in any of claims 2 to 5, wherein the reaction product of diglycidyl ether and bisphenol A with acrylic acid in a molar ration of 1 : 2 is used as the at least diolefinically unsaturated organic compound having a molecular weight between 130 and 2 000.

7. A process as claimed in any of the preceding claims, wherein the anionic polyurethane contains a water-insoluble photoinitiator for ultraviolet rays in an amount of 1 to 4 % by weight, based on the anionic polyurethane.

**Revendications**

1. Procédé d'obtention de revêtements sur des objets conducteurs de l'électricité, par dépôt électrophorétique de polyuréthanes anioniques, à partir de dispersions aqueuses, sur l'objet conducteur de l'électricité monté comme anode et irradiation par rayons UV ou faisceau d'électrons, caractérisé par le fait qu'on utilise, comme polyuréthane anionique, un produit d'addition d'un sel d'acide mercaptocarboxylique sur un polyuréthane, le polyuréthane étant un produit de réaction de polyisocyanates avec un mélange de

a) acrylesterdiols de poids moléculaires compris entre 146 et 3 000,

b) autres composés polyhydroxylés organiques différents de a) et de poids moléculaires compris entre 400 et 5 000 ainsi qu'éventuellement,

c) diols, diamines, aminoalcools ou triols, différents de a) de poids moléculaires compris entre 62 et 400, ou de l'eau,

en rapport NCO/OH de 0,4/1 à 1,3/1 et, le produit d'addition du sel d'acide mercaptocarboxylique sur le polyuréthane contenant 3 à 15 % en poids de groupes carboxylate.

2. Procédé selon la revendication 1, caractérisé par le fait que jusqu'à 50 % en poids du polyuréthane anionique sont remplacés par des composés organiques à au moins double insaturation oléfinique et de poids moléculaires compris entre 130 et 2 000.

3. Procédé selon la revendication 1 ou 2, caractérisé par le fait que la dispersion aqueuse contient 5 à 20 % en poids du polyuréthane anionique.

4. Procédé selon l'une des revendications précédentes, caractérisé par le fait que le rapport NCO/OH du polyuréthane à utiliser est compris entre 0,5/1 et 1,2/1.

5. Procédé selon l'une des revendications précédentes, caractérisé par le fait que le polyuréthane anionique à utiliser contient 0,3 à 3 moles de doubles liaisons C—C-acrylester dans 1 000 g.

6. Procédé selon l'une des revendications 2 à 5, caractérisé par le fait qu'on utilise, comme composé organique à au moins une double insaturation oléfinique, d'un poids moléculaire compris entre 130 et 2 000, le produit de réaction de l'éther diglycidique de bisphénol A avec l'acide acrylique, en rapport molaire de 1/2.

7. Procédé selon l'une des revendications précédentes, caractérisé par le fait que le polyuréthane anionique contient un photoinitiateur, insoluble dans l'eau, pour rayonnement UV, en proportion de 1 à 4 % en poids, rapportée au polyuréthane anionique.